Europäisches Patentamt

European Patent Office

Office européen des brevets

(11) Veröffentlichungsnummer: **0 271 921**
**A2**

(12) **EUROPÄISCHE PATENTANMELDUNG**

(21) Anmeldenummer: 87118834.8

(22) Anmeldetag: 18.12.87

(51) Int. Cl.4: **C04B 26/06** , E04F 15/12

(30) Priorität: 19.12.86 DE 3643632

(43) Veröffentlichungstag der Anmeldung:
22.06.88 Patentblatt 88/25

(84) Benannte Vertragsstaaten:
AT BE CH DE FR GB LI LU NL

(71) Anmelder: **Stotmeister GmbH**

**D-7894 Stühlingen-Weizen(DE)**

(72) Erfinder: **Güntert, Manfred**
**Breitenfeldstrasse 1**
**D-7894 Stühlingen-Weizen(DE)**
Erfinder: **Pieper, Karl**
**Amselweg 12**
**D-7894 Stühlingen-Weizen(DE)**
Erfinder: **Grochal, Peter, Dr.**
**Bloisstrasse 90**
**D-7890 Waldshut-Tiengen 1(DE)**

(74) Vertreter: **Patentanwälte Leinweber &**
**Zimmermann**
**Rosental 7/II Aufg.**
**D-8000 München 2(DE)**

(54) Dekorkies-Bodenbeschichtungsmaterial.

(57) Das Dekorkies-Bodenbeschichtungsmaterial für Innen-und Außenanwendung besteht aus einer Sandmischung aus natürlichen oder/und gefärbten Sandkörnern, einem Bindemittel und ggfls. Zusatzstoffen zur Herstellung farbiger am Boden verfestigter Bodenbeläge mit einer durchsichtigen Sandkörnerummantelung. Zur Erzielung eines weder die Umwelt noch die verarbeitenden Handwerker gefährdenden Materials sind als Bindemittel eine einkomponentige, wässrige, selbstvernetzende Polymerisationsdispersion mit einer Filmbildetemperatur (FM) größer als 0°C und zur vollständig ablaufenden Selbstvernetzung nach Wasserverdunstung bei Temperaturen zwischen 0 und 40° funktionelle Gruppen eines Hauptpolymers und/oder zugesetzte externe Vernetzer vorgesehen.

EP 0 271 921 A2

## Dekorkies-Bodenbeschichtungsmaterial

Die Erfindung bezieht sich auf ein Dekorkies-Bodenbeschichtungsmaterial für Innen-und Außenanwendung, bestehend aus einer Sandmischung aus natürlichen oder/und gefärbten Sandkörnern, einem Bindemittel und ggfls. Zusatzstoffen zur Herstellung farbiger am Boden verfestigter Bodenbeläge mit einer durchsichtigen Sandkörnerummantelung.

Es ist bereits bekannt, derartiges Dekorkies-Bodenbeschichtungsmaterial, das auch für den Außenbereich geeignet ist, auf der Basis von einkomponentigen, lösemittelhaltigen Polyurethanen herzustellen. In diesem Fall ist eine Abmischung der Polyurethankomponente mit der Buntsteinmischung auf der Baustelle notwendig. Die einkomponentigen Polyurethane härten nach Abdunstung der Lösungsmittel durch Luftfeuchtigkeit. Von Nachteil ist die Tatsache, daß zur Herstellung der Beläge die notwendige Anmischung an der Baustelle erfolgen muß, die Gesundheit durch zum Einsatz gelangende Isocyanate und Lösemittel gefährdet ist und daß eine Umweltbelastung durch Verdunstung der Lösemittel unvermeidbar ist. Ferner bedarf es zum Reinigen der Werkzeuge und der Mischvorrichtung ebenfalls des Einsatzes aggressiver Lösemittel.

Ferner ist es bekannt, Dekorkies-Bodenbeschichtungsmaterial auf Epoxidharz-Basis, das nur für den Innenbereich geeignet ist, einzusetzen. Dieses Material besteht aus einer Epoxidharzkomponente, einem Härter und der Sandmischung.

Auch hier müssen alle drei Komponenten auf der Baustelle vor der Anwendung gemischt werden.

Die Nachteile eines solchen Beschichtungsmaterials sind zunächst in der notwendigen Anmischung an der Baustelle zu sehen. Dabei müssen die drei Komponenten nämlich genau abgewogen werden. Desweiteren sind Epoxidharz und Härter vor dem Aushärten ebenfalls gesundheitlich nicht ungefährlich; die Anwendung ist deshalb in manchen Ländern verboten. Die Reinigung der Werkzeuge und des Mischers muß mit aggressiven Lösemitteln sofort nach Gebrauch erfolgen, wodurch zwangsläufig weitere Gesundheits-und Brandgefahr gegeben ist. Für den Außenbereich sind Epoxidharze aufgrund der mangelhaften Lichtbeständigkeit (UV-Empfindlichkeit) nicht geeignet; dies zeigt sich durch Vergilbung und Verlust der mechanischen Festigkeit des so hergestellten Belages.

An dieser Stelle ist zu erwähnen, daß Produkte, die mit gewöhnlichen, wässrigen Kunstharzdispersionen formuliert werden, für den Bodenbereich keine ausreichende Festigkeit aufweisen und wasserempfindlich und deshalb nicht reinigungsfähig sind. Ihr Einsatz im Außenbereich scheidet aus, da längere Wasserbelastung (Regen) zu starker Quellung, Trübung (Weißanlaufen) und schließlich zur Ablösung des Belages vom Untergrund führt.

Herkömmliche Bodegbeschichtungsmaterialien auf Epoxid-oder Polyurethanbasis sind deshalb nur in umständlicher Weise zu verarbeiten, da das Belagmaterial erst an der Baustelle gemischt werden kann. Es ist ferner nur während begrenzter Zeit verarbeitbar, nach beschränkter Topfzeit setzt bereits die Härtungsreaktion ein.Im übrigen können leicht Mischfehler auftreten. Ferner ist Brandgefahr sowie Gesundheitsgefährdung gegeben; da die Applikation mit einer Glättkelle erfolgt ist ein Hautkontakt praktisch unvermeidbar, was zu Hautreizungen führen kann. Bei relativ großen Auftragsmengen werden die Atemwege durch Epoxid-, Amin-, Isocyanatverbindungen bzw. Lösemittel stark belastet. Die Anmischvorrichtung und Arbeitsgeräte müssen sofort mit geeigneten Lösemitteln gereinigt werden. Dies beinhaltet weitere Probleme der Luftbelastung und sachgerechte Entsorgung der Waschreste.

Der Erfindung liegt die Aufgabe zugrunde, ein fertig gemischtes, gebrauchsfertiges Dekorkies-Bodenbeschichtungsmaterial der eingangs genannten Art zu schaffen, das weder die Umwelt noch die verarbeitenden Handwerker gefährdet und das mit den positiven Eigenschaften der herkömmlichen Produkte vergleichbar ist.

Das Dekorkies-Bodenbeschichtungsmaterial nach der Erfindung, bei dem diese Aufgabe gelöst ist, zeichnet sich im wesentlichen dadurch aus, daß als Bindemittel eine einkomponentige wässrige, selbstvernetzende Polymerisatdispersion mit einer Filmbildetemperatur (FMT) größer als 0° C und zur vollständig ablaufenden Selbstvernetzung nach Wasserverdunstung bei Temperaturen zwischen 0 und 40°C funktionelle Gruppen eines Hauptpolymers und/oder zugesetzte externe Vernetzer vorgesehen sind. Dieses Material ist bereits fertig gemischt, so daß keine Mischfehler auftreten können, besitzt keine beschränkte Topfzeit und ist daher, wie z.B. gewöhnliche Kunstharzputze, lagerfähig. Ebenfalls Reste in angebrochenen Gebinden sind weiter lagerfähig und noch später verwendbar. Es ist umwelt-und verarbeitungsfreundlich.Die verarbeitungsfertige Mischung ist nicht brennbar und ermöglicht die Arbeitsgerätereinigung mit Wasser und ein mit diesem Material hergestellter Dekorkies-Bodenbelag hält durch das zum Einsatz gelangende selbstvernetzende Acrylat-Bindemittel den üblichen Fußbodenbelastungen stand, ist außerordnetlich wetterbeständig, wasserfest und reinigungsfähig.

Nachstehend sei ein Beispiel für die Zusammensetzung des Dekorkies-Beschichtungsmaterials angegeben:

Beispiel

a) Bindemittelkomponente

| | | |
|---|---|---|
| Selbstvernetzbare Kunstharzdispersion | 18,9 | Gew.-% |
| Entschäumer | 0,2 | " |
| Koaleszenzmittel | 0,7 | " |
| Verdickungsmittel | 0,1 | " |
| Konservierungsmittel | ·0,1 | " |
| | 20 | |

b) Sandkomponente

| | | |
|---|---|---|
| Quarzsand | 80 | Gew.-% |
| | 100 | Gew.-% |

Der gehärtete Dekorkies-Bodenbelag läßt sich je nach Bedarf mit der vorstehend aufgeführten Bindemittelkomponente a) (ohne Sandzuschlag) nachversiegeln. Ebenfalls ist es möglich, einen gereinigten alten Belag durch Vesiegelung mit der Bindemittelkomponente aufzufrischen.

**Ansprüche**

1. Dekorkies-Bodenbeschichtungsmaterial für Innen-und Außenanwendung, bestehend aus einer Sandmischung aus natürlichen oder/und gefärbten Sandkörnern, einem Bindemittel und ggfls. Zusatzstoffen zur Herstellung farbiger am Boden verfestigter Bodenbeläge mit einer durchsichtigen Sandkörerummantelung, dadurch gekennzeichnet, daß als Bindemittel eine einkomponentige, wässrige, selbstvernetzende Polymerisatdispersion mit einer Filmbildetemperatur (FM) größer als 0° C und zur vollständig ablaufenden Selbstvernetzung nach Wasserverdunstung bei Temperaturen zwischen 0 und 40° funktionelle Gruppen eines Hauptpolymers und/oder zugesetzte externe Vernetzer vorgesehen sind.

2. Dekorkies-Bodenbeschichtungsmaterial nach Anspruch 1, dadurch gekennzeichnet, daß das einkomponentige Bindemittel eine Reinacrylatdispersion ist.

3. Dekorkies-Bodenbeschichtungsmaterial nach Anspruch 1 oder 2, dadurch gekennzeichnet, daß es in Form eines einkomponentigen, fertig gemischten Mörtels vorliegt.

4. Dekorkies-Bodenbeschichtungsmaterial nach einem der Ansprüche 1 bis 3, dadurch gekennzeichnet, daß die natürlichen oder gefärbten Sandkörner aus Quarzsand bestehen und die Korngröße zwischen 0,5 bis 10mm, bevorzugt 2 bis 4 mm liegt.

5. Dekorkies-Bodenbeschichtungsmaterial nach einem der Ansprüche 1 bis 4, dadurch gekennzeichnet, daß es mit dem der Herstellung dienenden Bindemittel auch nachversiegelbar ist.